**Europäisches Patentamt**

**European Patent Office**

**Office européen des brevets**

(19)

(11) Veröffentlichungsnummer: **0 197 384**
**B1**

(12) **EUROPÄISCHE PATENTSCHRIFT**

(45) Veröffentlichungstag der Patentschrift:
**24.08.88**

(21) Anmeldenummer: **86103779.4**

(22) Anmeldetag: **20.03.86**

(51) Int. Cl.⁴: **A 46 D 3/00**, A 46 B 3/04,
A 46 B 3/06

(54) Verfahren zur Herstellung von Borstenwaren.

(30) Priorität: **29.03.85 DE 3511528**

(43) Veröffentlichungstag der Anmeldung:
**15.10.86 Patentblatt 86/42**

(45) Bekanntmachung des Hinweises auf die Patenterteilung:
**24.08.88 Patentblatt 88/34**

(84) Benannte Vertragsstaaten:
**AT BE CH FR GB IT LI NL SE**

(56) Entgegenhaltungen:
**EP - A - 0 142 885**
**EP - A - 0 149 996**
**DE - A - 1 532 809**
**DE - C - 264 652**
**DE - C - 845 933**
**FR - A - 1 133 844**
**FR - A - 1 453 829**
**US - A - 2 643 158**
**US - A - 2 655 409**

(73) Patentinhaber: **CORONET-WERKE Heinrich Schlerf GmbH, D-6948 Wald-Michelbach/Odw. (DE)**

(72) Erfinder: **Weihrauch, Georg, Am Rossert 1, D-6948 Waldmichelbach (DE)**

(74) Vertreter: **Lichti, Heiner, Dipl.-Ing. et al, Patentanwälte Dr. Ing. Hans Lichti Dipl.-Ing. Heiner Lichti Dipl.-Phys. Dr.rer.nat. Jost Lempert Durlacher Strasse 31 Postfach 410760, D-7500 Karlsruhe 41 (DE)**

Beschreibung

Die Erfindung betrifft ein Verfahren zur Herstellung von Borstenwaren, bestehend aus einem Borstenträger aus giess- und schäumfähigem Material und darin verankerten Borsten aus Kunststoff, indem die Borsten — Einzelborsten oder Borstenstränge — durch Kanäle in eine Form für den Borstenträger eingeführt, an ihrem in der Form befindlichen Ende zur Bildung einer Verdickung thermisch aufgeschmolzen und anschliessend die Form mit dem Borstenträgermaterial ausgefüllt wird.

Die herkömmliche Technik bei der Herstellung von Borstenwaren, wie Bürsten, Besen, Matten oder dergleichen, besteht darin, die Borsten, ggf. vom Endlosstrang, zu bündeln, zusammenzufassen und auf Länge zu schneiden und daraufhin jedes Bündel mechanisch, ggf. unter Zuhilfenahme von Kitt- oder Klebemassen, in vorgeformten Löchern des Borstenträgers mechanisch zu befestigen. Das Herstellungsverfahren besteht also im wesentlichen aus drei Stufen, nämlich Herstellung des Borstenbündels, Herstellung des Borstenträgers und Verbinden der beiden miteinander. Um dieses aufwendige Verfahren zu vereinfachen, hat es seit Aufkommen der Kunststoffe nicht an Versuchen gefehlt, das thermoplastische Verhalten solcher Kunststoffe für den Herstellungsvorgang zu nutzen. So ist bereits vor vielen Jahrzehnten vorgeschlagen worden (DE-PS 355 645), die Borsten mit ihren Befestigungsenden in eine Hohlform für den Borstenträger einzuführen, die Hohlform mit einer unter Hitze plastifizierbaren Masse auszufüllen. Nach Erhärten dieser Masse sollen die Borsten in dem Borstenträger verankert sein. Bei dieser Methode findet keine oder nur eine sehr schlechte Bindung zwischen der glattwandigen Borste und dem Borstenträgermaterial statt, so dass die zwischen diesen Materialien vorhandenen Haftkräfte nicht ausreichen, um der Borste eine genügende Auszugsfestigkeit zu verleihen. Das Verfahren konnte sich deshalb nicht durchsetzen.

Dieses Verfahren ist sehr viel später wieder aufgegriffen worden (DE-PS 895 140) und in Erkenntnis des vorgenannten Nachteils dahingehend modifiziert worden, dass für die Borsten und den Borstenträger gleiche Materialien, nämlich Polyamide oder Polyurethane verwendet werden, um bei der erhöhten Verarbeitungstemperatur eine Art thermischer Verschmelzung zwischen den beiden Materialien zu erhalten. Damit lassen sich aber nur Borstenwaren mit den werkstoffspezifischen Eigenschaften des jeweils verwendeten Materials herstellen, die wiederum nur bestimmten Anwendungszwecken gerecht werden. Auch handelt es sich bei den speziell vorgeschlagenen Materialien um relativ hochwertige Kunststoffe, die für viele Borstenwaren zu einer nicht vertretbaren Verteuerung führen.

Die Borstenträger werden heute im allgemeinen im Spritzgiessverfahren hergestellt, so dass sich dieses auch bei der Ausführung der vorgenannten Verfahren anbietet. Hierbei haben sich jedoch Probleme deshalb ergeben, weil das in die Form eingespritzte flüssige Material zwischen die Borsten und zwischen diese und den sie führenden Kanälen eindringt und nach dem Erhärten zu einer unerwünscht unregelmässigen borstenseitigen Abschlussfläche am Borstenträger führt. Auch verliert das Borstenbündel im Bereich seines Ansatzes am Borstenträger seine Elastizität, wobei — da dieses Eindringen nicht gleichmässig geschieht — die verschiedenen Borstenbündel unter Umständen unterschiedliches Biegeverhalten zeigen. Eine anschliessende Versäuberung der Ansatzstellen ist nicht oder nur mit sehr grossem Aufwand möglich.

Um die Einbindung der Borsten im Borstenträger zu verbessern, ist es weiterhin bekannt (DE-PS 845 933), die in den Formraum hineinreichenden Borstenenden aufzuschmelzen und ggf. zu verformen, so dass jedes Borstenbündel an seinem Ende eine seinen Durchmesser überschreitende Verdickung aufweist, die mit Abstand von der einen Formwandung angeordnet ist. Nach dem Umspritzen bzw. Umschäumen der Borstenenden sind diese kraft- und formschlüssig im Borstenträger verankert, so dass sich eine ausreichende Auszugsfestigkeit ergibt. Das Problem des Austretens des Borstenträgermaterials in die Führungskanäle der Borstenstränge ist damit allerdings nicht gelöst. Es hat deshalb nicht an Versuchen gefehlt (DE-OS 2 922 877), den Führungskanal für jedes Borstenbündel abzudichten, indem beispielsweise das Spritzgussmaterial zunächst mit geringem Druck an die eine Formwandung gespritzt und vorerhärtet und erst danach die grössere Menge des Spritzgussmaterials in die Form eingeführt wird. Dieses Verfahren ist dann, wenn man eine einwandfreie Abschlussfläche am Borstenträger erhalten will, ausserordentlich aufwendig. Weiterhin wird ein intensives Kühlen der Kanäle vorgeschlagen, was bei eng stehenden Borstenbündeln praktisch unmöglich ist. Auch der Vorschlag, in den Führungskanälen einen Gegendruck gegen den Spritzgussdruck zu erzeugen, ist nicht praktikabel, da dieser Gegendruck wiederum zu einer unregelmässigen Abschlussfläche am Borstenträger führt. Das gleiche gilt für ein vor dem Spritzgussvorgang erfolgendes Verschliessen der Mündungsöffnungen der Führungskanäle, die nach dem Druckabbau in der Form geöffnet werden, um anschliessend die Borstenstränge in das noch weichplastische Material einzudrücken. Hier wird in jedem Fall auch die Haftung zwischen Borsten und Borstenträgermaterial beeinträchtigt. Schliesslich schaffen auch mechanische Abdichtungen im Bereich der Führungskanäle, z.B. durch konusförmige Verengung der Mündungsöffnung oder dort angeordnete Dichtlippen keine Lösung des Problems, denn die Borsten lassen sich nicht so dicht packen, als dass nicht zwischen ihnen kapillarartige Zwischenräume verblieben. Dies gilt vor allem bei profilierten Borsten und hohlen Borsten. Die bei Borsten jeglicher Art auftretenden Schwankungen im Durchmesser und die meist von der Kreisform abweichende Querschnittsform führen in einem Bündel zu grösseren Lücken.

Nach einem älteren Vorschlag (EP-A-0 149 996) sollen die am befestigungsseitigen Ende der Borsten angeformten Verdickungen mittels einer Anschlagplatte gegen den Öffnungsrand des Kanals gedrückt werden, um die Abdichtung zu besorgen. Da die Anschlagplatte aber vor dem Schliessen der Form entfernt werden muss, bleibt die Dichtkraft während des Spritzens oder Schäumens nicht erhalten. Das gleiche gilt für einen anderen älteren Vorschlag (EP-A-0 142 885), wonach der sich in der Form aufbauende Druck die Verdickung an den Öffnungsrand drücken soll. Dies würde aber einen schlagartig und isostatisch wirksamen Druckaufbau erfordern, was in der Praxis weder beim Spritzgiessen noch beim Schäumen der Fall ist.

In Erkenntnis dieser Probleme geht eine andere Technologie dahin, Borstenträger und Borsten in einem einzigen Spritzgiessverfahren herzustellen, wobei das Spritzgusswerkzeug einen entsprechenden Formhohlraum für Borstenträger und Borsten aufweist. Hier ist der Nachteil, dass Kunststoffborsten ihre Biegefähigkeit und ihr Wiederaufrichtungsvermögen, wie auch ihre Festigkeit in erster Linie durch Verstrecken des Borstenmaterials erhalten. Diese Eigenschaften weist eine gespritzte Borste nicht auf. Es müssen deshalb bei einstückig gespritzten Bürsten (DE-A-2 155 888, US-C-2 355 744) die Borsten nach dem Spritzgiessvorgang verstreckt werden. Dies setzt komplizierte Werkzeuge und entsprechende Ansatzmöglichkeiten an den Borsten zum Aufbringen der Zugkräfte auf die einzelne Borste voraus. Auch lassen sich Borstenbündel auf diese Art praktisch nicht stabilisieren. Für feine Borsten, beispielsweise Zahnbürsten, Kleiderbürsten od. dgl., ist dieses Verfahren völlig untauglich. Ebenso setzt es für Borste und Borstenträgre gleiches Material voraus, dessen Auswahl in erster Linie von den höheren Anforderungen, die an das Borstenmaterial gestellt werden, bestimmt wird.

Aus FR-A-1 133 844 ist ein Verfahren zur Herstellung von Borstenwaren bekannt, wobei auch am befestigungsseitigen Ende der Borsten angeformte Verdickungen mittels Heizelemente an die Mündungsöffnung des sie führenden Kanals gedrückt werden; jedoch besteht der Borstenträger gemäss dieser Patentschrift teilweise aus einem Rahmen und teilweise aus einem giessfähigen Material, so dass sich das Problem des Austretens des Borstenträgermaterials in die Führungskanäle der Borstenstränge nicht stellt.

Der Erfindung liegt die Aufgabe zugrunde, ein Verfahren vorzuschlagen, mit dessen Hilfe Borstenwaren hergestellt werden können, deren Borsten und Borstenträger aus beliebigen giess- oder schäumfähigen, gegebenenfalls auch verschiedenen Werkstoffen bestehen, und ferner am Ansatz der Borstenbündel am Borstenträger ein absolut sauberer Abschluss erhalten wird.

Ausgehend von dem eingangs genannten Verfahren, bei dem die Borsten an ihrem in den Formraum reichenden Ende zur Bildung einer Verdickung thermisch aufgeschmolzen werden, wird diese Aufgabe erfindungsgemäss dadurch gelöst, dass die Verdickung an den Borsten mittels Zugkräften an den Borsten zur dichtenden Anlage an die Mündungsöffnung des ihn führenden Kanals gebracht wird.

Die Erfindung geht also zunächst von der bekannten Tatsache aus, dass die Anbringung von Verdickungen am Borstenende zu einer einwandfreien Verankerung der Borsten im Borstenträger führt, in dem das Borstenbündel durch kombinierten Kraft- und Formschluss im Borstenträger gehalten wird.

Das Austreten des plastischen Materials des Borstenträgers aus dem Formhohlraum in die Führungskanäle wird dadurch sicher vermieden, dass die Mündungsöffnung jedes Führungskanals durch die Verdickung an dem Ende der von ihm geführten Borsten aufgrund der an ihnen wirkenden Zugkräfte verschlossen wird, wobei zwischen der Verdickung und der Formwandung ein Hinterschnitt verbleiben kann, in den das plastische Material des Borstenträgers eindringen kann, um die gewünschte Verankerung zusätzlich zu verbessern. Die Verdickung kann so geformt sein, dass sie den Öffnungsrand nur linienförmig abschliesst, wodurch sich eine besonders gute Abdichtung ergibt. Dies lässt sich ohne weiteres dadurch erreichen, dass die den Borsten zugekehrte Fläche der Verdickung gekrümmt ist. Eine solche Krümmung stellt sich beim thermischen Aufschmelzen der Borstenenden in der Regel von allein ein, indem sich die Borsten beim Aufschmelzen verkürzen und das plastische Material sich seitlich zu einer kugel- bzw. perligen Form ausdehnt. Dieser Effekt stellt sich aufgrund der Verstreckung der Borsten automatisch ein. Stattdessen kann aber auch die Kontur der Verdickung an der Rückseite so ausgebildet sein, dass sie einer entsprechenden Kontur im Bereich der Mündungsöffnung des Führungskanals entspricht, um beispielsweise längere Dichtspalte oder dergleichen zu bilden.

Das erfindungsgemässe Verfahren lässt sich bei jeder beliebigen Werkstoffkombination, insbesondere auch bei Werkstoffen mit unterschiedlichen Schmelzpunkten, anwenden, so dass sich die auf diese Weise hergestellten Borstenwaren hinsichtlich Anwendungszweck, technologischer Anforderungen und Preisgestaltung in jeder Hinsicht optimieren lassen. Auch sorgt die Verdickung für eine einwandfreie Abdichtung bei Einzelborsten mit von der Kreisform abweichender Querschnittsform, wie auch bei profilierten oder hohlen Borsten, ob einzeln oder im Bündel.

Für die praktische Umsetzung des erfindungsgemässen Prinzips sind mehrere Ausführungen denkbar. So kann die Verdickung vor dem Einbringen des Borstenträgermaterials in die Form in die Dichtlage gebracht werden. Dies kann durch Andrücken der Verdichtung an die Mündungsöffnung des Führungskanals mittels Zugkräften an den Borsten in mechanischer Weise geschehen; in einfachster Weise dadurch, dass nach dem Anformen der Verdickung die Borsten im Führungskanal zurückgezogen oder aber die entsprechende Formhälfte an die Verdickung herangeschoben wird, bis die Verdickung an der Mündungsöffnung anliegt.

Stattdessen ist es ferner möglich, die Verdickung anlässlich ihrer Erzeugung in die Dichtlage zu bringen, indem der Überstand des Borstenstrangs in dem Formhohlraum und der Aufschmelzvorgang so gewählt werden, dass die aufgeschmolzene Verdickung praktisch auf den Mündungsrand des Führungskanals aufschrumpft.

Wie bereits angedeutet, kann die Verdickung vor oder während des Aufschmelzens der Borsten auch geformt und gegebenenfalls auch die Kontur des Öffnungsrandes des Führungskanals entsprechend geformt werden. So ist es beispielsweise möglich, an dem Führungskanal eine Mündungsöffnung grösseren Durchmessers, als für die Führung der Borsten notwendig, auszubilden und die Verdickung mit einem entsprechenden Ansatz zu versehen, der in der Dichtlage in die erweiterte Mündungsöffnung des Führungskanals hineingezogen wird. Damit ergeben sich neben einer möglichen Abdichtung der Verdickung am äusseren Öffnungsrand zusätzliche Dichtspalte zwischen der erweiterten Mündungsöffnung und dem angeformten Ansatz. In diesem Fall weist der Borstenträger am Fertigprodukt borstenseitig entsprechende Erhöhungen auf, aus denen jeweils ein Borstenbündel aufsteigt.

Gemäss einem weiteren Merkmal der Erfindung können die Borsten mit einer sie umschliessenden Hülse in den Kanal eingeführt und die Verdickung gegen die Stirnseite der Hülse verformt werden. Mit dieser Ausbildung ist es insbesondere möglich, die Kontur an der der Formwandung zugekehrten Rückseite der Verdickung zu beeinflussen. Diese Ausführungsform gibt ferner die Möglichkeit, die Hülse dicht in dem Kanal zu führen und die Verdickung dichtend an die Stirnseite der Hülse durch Zugkräfte anzudrücken. Die Abdichtung erfolgt somit nicht unmittelbar am Öffnungsrand des Kanals, sondern an der Hülse, wobei diese zusammen mit den Borsten in eine mit der Formwandung bündige Lage zurückgezogen wird. Stattdessen ist es aber auch möglich, die Hülse nach dem Anformen der Verdickung in den Kanal zurückzuziehen und die Verdickung in ihre Dichtlage an der Mündungsöffnung des Kanals zu bringen.

In weiterer Abwandlung des Verfahrens können gegebenenfalls auch mehrere in benachbarten Kanälen geführte Borsten zu einer zusammenhängenden Verdickung verformt werden, indem die einzelnen Verdickungen über Stege oder dergleichen miteinander verbunden sind. Es müssen dabei allerdings ausreichende Durchtrittsquerschnitte für das Material des Borstenträgers verbleiben.

Gegenüber den bekannten Verfahren hat das erfindungsgemässe Verfahren in allen beschriebenen Ausführungsformen den weiteren wesentlichen Vorteil, dass die Einbindungslänge der Borsten auf das für ihre einwandfreie Verankerung notwendige Mass beschränkt ist, mit der Folge, dass einerseits der Borstenträger nur die für seine Stabilität geforderte Dicke aufweisen muss, seine Dicke also relativ gering sein kann. Dies ist insbesondere bei Zahnbürsten von Bedeutung. Ferner wird die für die Einbindung notwendiger Borstenlänge auf ein Minimum eingegrenzt, so dass das im allgemeinen wertvollere Borstenmaterial am wirtschaftlichsten für seinen eigentlichen Zweck, nämlich die Bildung der Borste, genutzt werden kann.

Nachstehend ist die Erfindung anhand vorrichtungstechnischer Ausführungsbeispiele, die in der Zeichnung wiedergegeben sind, beschrieben. In der Zeichnung zeigen:

Fig. 1 einen Schnitt durch eine Spritzgiess- oder Schäumform nach dem Ausfüllen des Formhohlraums;

Fig. 2 einen der Fig. 1 ähnlichen Schnitt nach dem Entformen des Borstenträgers;

Fig. 3 eine schematische Darstellung der Verfahrensschritte;

Fig. 4 einen der Fig. 3 ähnlichen Schnitt einer weiteren Ausführungsform und

Fig. 5 eine weitere abgewandelte Ausführungsform im Schnitt.

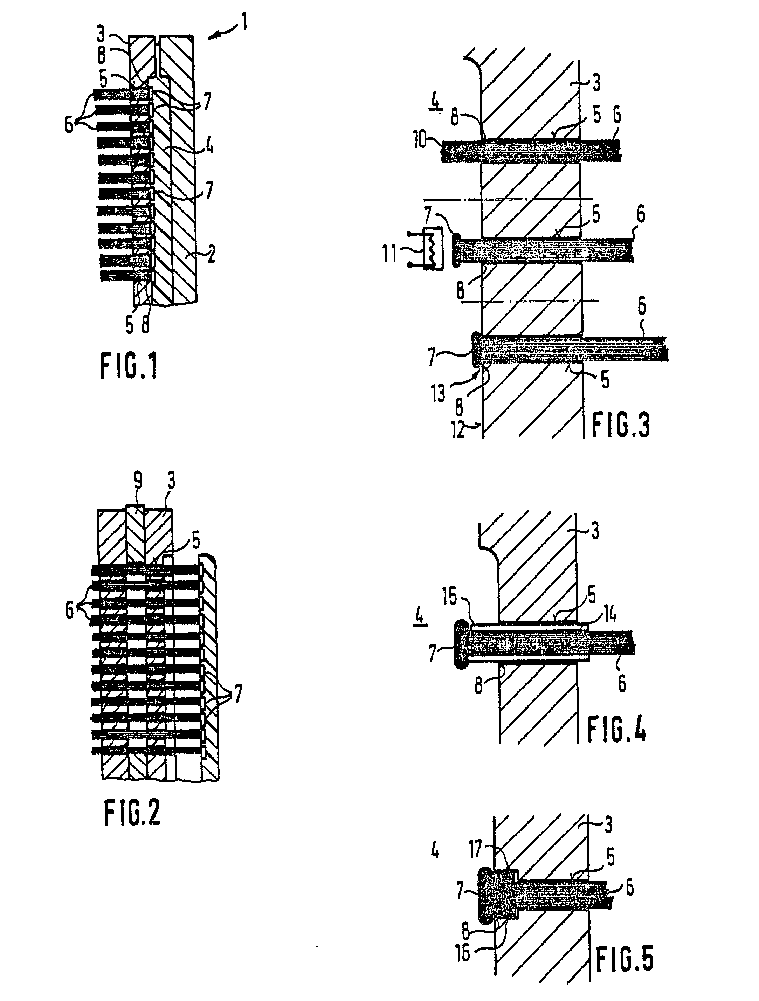

In Fig. 1 ist ein Formwerkzeug 1, z.B. ein Spritzgusswerkzeug, erkennbar, das aus zwei Teilen 2, 3 besteht, von denen das Formteil 3 ortsfest, das Formteil 2 demgegenüber zum Öffnen und Schliessen der Form verschiebbar ist. Die beiden Formteile 2, 3 schliessen einen Formraum 4 ein, dessen Kontur der Aussenkontur eines Borstenträgers entspricht. Auf dem aufspannseitigen Formteil 3 sind mehrere — beim dargestellten Ausführungsbeispiel parallele — Führungskanäle 5 angeordnet, in denen jeweils ein Borstenstrang 6 geführt ist, der mit seinem Ende in den Formraum 4 hineinragt. Die Borstenstränge 6 können als geschnittene Borstenbündel oder aber als Endlosmaterial von einer Spule zugeführt werden.

Vor dem Ausfüllen des Formraums 4 mit dem Material des Borstenträgers werden die Enden der Borstenstränge 6 aufgeschmolzen, derart, dass sich an jedem Borstenstrang eine Verdickung 7 bildet. Dies kann bei geschlossener oder geöffneter Form 1 geschehen. Im Falle einer geschlossenen Form kann beispielsweise Heissluft mit einer Temperatur in die Form eingeblasen werden, die zum Aufschmelzen der Borstenenden ausreicht. Bei geöffneter Form kann die notwendige Erweichungstemperatur berührungslos oder durch Kontaktwärme aufgebracht werden. Nach oder während der Erzeugung der Verdickungen 7 werden diese in Dichtlage an den Öffnungsrand 8 der Führungskanäle gebracht. Zwischen der Formwandung des Formteils 3 im Bereich der Mündungsöffnung 8 der Führungskanäle 7 einerseits und der dieser Formwandung zugekehrten Rückseite der Verdickungen 7 ist ein Hinterschnitt vorhanden. In die geschlossene Form 1 wird dann das Material für den Borstenträger in flüssig bis plastischer Form eingebracht oder aber innerhalb der Form erzeugt, wobei das Material in die Hinterschnitte zwischen Verdickung 7 und Formwandung des Formteils 3 eindringt.

Nach dem Erhärten des Borstenträger-Materials wird die Form durch Abrücken des Formteils 2 geöffnet, (siehe Fig. 2) wobei die Borstenstränge 6 durch die Führungskanäle 5 des ortsfesten Formteils 3 hindurchgezogen werden. Hinter dem Formteil 3 können dann die Borsten im Falle eines Endlosmaterials mittels eines Messers 9 auf Länge geschnitten werden. Daraufhin werden die Borstenstränge 6 in die Führungskanäle 5 nachgeschoben, bis sich ihre Enden wieder im Formhohlraum 4 befinden.

In Fig. 3 sind die wesentlichen Verfahrensschritte in vergrössertem Massstab wiedergegeben. Der Borstenstrang 6 wird in den Führungskanal 5 des Formteils 3 soweit eingeführt, bis sein vorderes Ende 10 die Mündungsöffnung 8 des Führungskanals 5 passiert und in den Formhohlraum 4 hineinragt. In der zweiten Stufe wird das Ende 10 des Borstenstrangs 6 zu der Verdickung 7 aufgeschmolzen, wobei bei dem gezeigten Ausführungsbeispiel eine Heizung 11 vorgesehen ist, die berührungslos oder durch Kontaktwärme die notwendige Erweichungstemperatur herstellt. Die so gebildete Verdickung 7 wird dann in der dritten Stufe zur Dichtlage an die Mündungsöffnung 8 herangebracht durch Zug am Borstenstrang 6. Dabei bildet sich zwischen der Rückseite der Verdickung 7 und der Formwandung 12 des Formteils 3 ein Hinterschnitt 13, in den dann das fliessfähige Material des Borstenträgers eindringen kann.

Bei der Ausführungsform gemäss Fig. 4 ist der Borstenstrang von einer Führungshülse 14 eingeschlossen, die aussenseitig dicht im Führungskanal 5 geführt wird. Die Hülse 14 weist eine gegebenenfalls speziell konturierte Stirnseite 15 auf, gegen die die Verdickung 7 ausgeformt wird. Vor dem Ausfüllen des Formraums 4 bzw. dem Plastifizieren des darin befindlichen Materials werden der Borstenstrang 6 und die Hülse 14 zurückgezogen, wobei die Verdickung 7 wiederum in die Dichtlage am Öffnungsrand 8 des Führungskanals 5 gelangt. Dabei kann die Führungshülse entweder weiter zurückgezogen werden als der Borstenstrang 6 oder aber in eine Lage gebracht werden, in der sie etwa bündig mit der Mündungsöffnung 8 abschliesst, so dass die Abdichtung zwischen der Verdickung 7 und der Stirnseite 15 der Hülse 14 sowie weiterhin zwischen der Hülse 14 und dem Führungskanal erfolgt.

Fig. 5 zeigt ein Ausführungsbeispiel, bei dem die Verdickung 7 während oder nach dem Erweichen des Endes des Borstenstranges 6 in bestimmter Weise konturiert wird. In diesem Fall wird die Verdickung mit einem den Borsten zugekehrten zylindrischen Ansatz 16 versehen. In korrespondierender Weise ist der Führungskanal 5 im Bereich seiner Mündungsöffnung 8 zu einem Sackloch 17 erweitert, dessen Innendurchmesser und Tiefe der Form des Ansatzes 16 entspricht. Die solchermassen gebildete Verdickung 7 wird nach ihrer Erzeugung in das Sackloch 17 hineingedrängt, so dass neben dem Dichtsitz zwischen Verdickung 7 und Öffnungsrand 8 ferner Dichtspalte zwischen dem Ansatz 16 und dem Sackloch 17 entstehen, die vor allem dem Druckabbau dienen.

## Patentansprüche

1. Verfahren zur Herstellung von Borstenwaren, bestehend aus einem Borstenträger aus giess- oder schäumfähigem Material und darin verankerten Borsten (6) aus Kunststoff, indem die Borsten — Einzelborsten oder Borstenstränge — durch Kanäle (5) in eine Form für die Borstenträger eingeführt, an ihrem in der Form befindlichen Ende zur Bildung einer Verdickung (7) thermisch aufgeschmolzen und anschliessend die Form mit dem Borstenträgermaterial ausgefüllt wird, wobei die Verdickung an den Borsten mittels Zugkräften an den Borsten zur dichtenden Anlage an die Mündungsöffnung (8) des sie führenden Kanals gebracht wird.

2. Verfahren nach Anspruch 1, dadurch gekennzeichnet, dass die Verdickung vor dem Einbringen des Borstenträgermaterials in die Form in die Dichtlage gebracht wird.

3. Verfahren nach Anspruch 1 oder 2, dadurch gekennzeichnet, dass die Verdickung anlässlich ihrer Erzeugung in die Dichtlage gebracht wird.

4. Verfahren nach Anspruch 1, dadurch gekennzeichnet, dass nach dem Anformen der Verdickung die Borsten in den Führungskanal zurückgezogen werden.

5. Verfahren nach einem der Ansprüche 1 bis 4, dadurch gekennzeichnet, dass nach dem Anformen der Verdickung die die Borsten aufnehmende Formhälfte an die Verdickung herausgeschoben wird, bis die Verdickung an der Mündungsöffnung des Kanals dichtend anliegt.

6. Verfahren nach einem der Ansprüche 1 bis 5, dadurch gekennzeichnet, dass die Verdickung geformt wird.

7. Verfahren nach einem der Ansprüche 1 bis 6, dadurch gekennzeichnet, dass die Verdickung so ausgebildet wird, dass zwischen ihr und der die Mündungsöffnung des Kanals aufweisenden Formwandung ein Hinterschnitt (13) gebildet wird.

8. Verfahren nach einem der Ansprüche 1 bis 6, dadurch gekennzeichnet, dass die Mündungsöffnung des Kanals mit einer an die Form der Verdickung angepassten Kontur versehen wird.

9. Verfahren nach einem der Ansprüche 1 bis 8, dadurch gekennzeichnet, dass die Borsten mit einer sie umschliessenden Hülse (14) in den Kanal eingeführt werden und die Verdickung gegen die Stirnseite (15) der Hülse verformt wird.

10. Verfahren nach dem Anspruch 9, dadurch gekennzeichnet, dass die Hülse dicht in dem Kanal geführt und die Verdickung dichtend an die Stirnseite der Hülse angedrückt wird.

11. Verfahren nach einem der Ansprüche 9 oder 10, dadurch gekennzeichnet, dass die Hülse nach dem Anformen der Verdickung in den Kanal zurückgezogen und die Verdickung in ihre Dichtlage an der Mündungsöffnung des Kanals gebracht wird.

12. Verfahren nach einem der Ansprüche 1 bis 11, dadurch gekennzeichnet, dass mehrere in benachbarten Kanälen geführte Borsten an ihren Enden zu einer zusammenhängenden Verdickung verformt werden.

13. Verfahren nach einem der Ansprüche 1 bis 12, dadurch gekennzeichnet, dass Borsten und Borstenträger aus verschiedenen Werkstoffen bestehen.

## Claims

1. Process for producing bristle products comprising a bristle carrier made from mouldable or foamable material and plastic bristles (6) anchored therein, in that the bristles, in the form of individual bristles or bristle strands, are passed through channels (5) into a mould for the bristle carrier, are thermally melted at the end thereof located in the mould for forming a thickened portion (7) and subsequently the mould is filled with the bristle carrier material, whereby the thickened portion on the bristles is brought by tensile forces on the latter into sealing engagement with the opening (8) of the channel carrying the same.

2. Process according to claim 1, characterized in that prior to the introduction of the bristle carrier material into the mould, the thickened portion is brought into the sealing position.

3. Process according to claims 1 or 2, characterized in that in connection with its production, the thickened portion is brought into the sealing position.

4. Process according to claim 1, characterized in that following the shaping of the thickened portion, the bristles are drawn back into the guide channel.

5. Process according to one of the claims 1 to 4, characterized in that after shaping the thickened portion, the mould half receiving the bristles is moved out to the thickened portion until the latter sealingly engages with the opening of the channel.

6. Process according to one of the claims 1 to 5, characterized in that the thickened portion is moulded.

7. Process according to one of the claims 1 to 6, characterized in that the thickened portion is constructed in such a way that an undercut (13) is formed between it and the mould wall having the channel opening.

8. Process according to one of the claims 1 to 6, characterized in that the channel opening is provided with a contour adapted to the shape of the thickened portion.

9. Process according to one of the claims 1 to 8, characterized in that the bristles are introduced into the channel with a sleeve (14) surrounding them and the thickened portion is shaped against the face (15) of the sleeve.

10. Process according to claim 9, characterized in that the sleeve is tightly guided in the channel and the thickened portion is sealingly pressed against the face of the sleeve.

11. Process according to one of the claims 9 or 10, characterized in that after shaping the thickened portion, the sleeve is drawn back into the channel and the thickened portion is brought into its sealing position on the channel opening.

12. Process according to one of the claims 1 to 11, characterized in that the ends of several bristles guided in adjacent channels are shaped to form a cohesive thickened portion.

13. Process according to one of the claims 1 to 12, characterized in that the bristles and the bristle carriers are made from different materials.

**Revendications**

1. Procédé de fabrication d'articles à soies comprenant un support de soies en une matière apte à la coulée ou à la transformation en mousse, ainsi que des soies (6) en matière synthétique qui y sont ancrées, en introduisant ces soies (soies individuelles ou cordons de soies) via des canaux (5) dans un moule prévu pour le support de soies, après quoi ces soies sont soumises à une fusion thermique à leur extrémité se trouvant dans le moule en vue de former un épaississement (7), après quoi le moule est comblé par la matière du support de soies, l'épaississement formé sur les soies étant amené, au moyen de forces de traction exercées sur ces dernières, à venir s'appliquer de manière étanche sur l'ouverture (8) formant l'embouchure du canal dans lequel elles circulent.

2. Procédé selon la revendication 1, caractérisé en ce que, avant l'introduction de la matière du support des soies, l'épaississement est introduit en position étanche dans le moule.

3. Procédé selon la revendication 1 ou 2, caractérisé en ce que, en vue, de sa formation, l'épaississement est amené en position étanche.

4. Procédé selon la revendication 1, caractérisé en ce que, après la mise à forme de l'épaississement, les soies sont rétractées dans le canal de guidage.

5. Procédé selon une des revendications 1 à 4, caractérisé en ce que, après la mise à forme de l'épaississement, la moitié du moule qui reçoit les soies est rétractée sur l'épaississement jusqu'à ce que celui-ci vienne s'appliquer de manière étanche sur l'ouverture formant l'embouchure du canal.

6. Procécdé selon une des revendications 1 à 5, caractérisé en ce que l'épaississement est mis à forme.

7. Procédé selon une des revendications 1 à 6, caractérisé en ce que l'épaississement est réalisé de façon à former une contre-dépouille (13) entre lui-même et la paroi du moule comportant l'ouverture formant l'embouchure du canal.

8. Procédé selon une des revendications 1 à 6, caractérisé en ce que l'ouverture formant l'embouchure du canal comporte un countour adapté à la forme de l'épaississement.

9. Procédé selon une des revendications 1 à 8, caractérisé en ce que les soies comportant une douille (14) qui les entoure, sont introduites dans le canal, l'épaississement étant déformé contre la face frontale (15) de cette douille.

10. Procédé selon la revendication 9, caractérisé en ce que la douille est guidée de manière étanche dans le canal, tandis que l'épaississement est pressé hermétiquement sur la face frontale de cette douille.

11. Procédé selon une des revendications 9 ou 10, caractérisé en ce que, après la mise à forme de l'épaississement, la douille est rétractée dans le canal, tandis que l'épaississement est amené dans sa position étanche sur l'ouverture formant l'embouchure du canal.

12. Procédé selon une des revendications 1 à 11, caractérisé en ce que plusieurs soies guidées dans des canaux voisins sont déformées, à leurs extrémités, en un épaississement cohérent.

13. Procédé selon une des revendications 1 à 12, caractérisé en ce que les soies et les supports de soies sont constitués de matières premières différentes.

FIG.1

FIG.2

FIG.3

FIG.4

FIG.5